# EUROPEAN PATENT APPLICATION

(11) **EP 2 551 493 A2**
(43) Date of publication of application: **30.01.2013**
(21) Application number: 12177304.8
(22) Date of filing: 20.07.2012
(51) Int. Cl.: F02C 7/36

(54) **Gearing assembly**

(30) Priority: 28.07.2011 US 201113192526; 30.03.2012 US 201213436278
(71) Applicant: Hamilton Sundstrand Corporation, Windsor Locks, CT 06096-1010 (US)
(72) Inventor: Lemmers, Jr., Glenn C., Loves Park, IL Illinois 61111 (US)
(74) Representative: Hull, James Edward

(57) **Abstract**

A gearing assembly (52) is provided and includes a mechanical transmission (56), a differential (72), the mechanical transmission (56) and the differential (72) being configured to rotatably couple a prime mover (10) and a generator (50) such that a first rotational speed input to the mechanical transmission (56) is output to the generator (50) by the differential (72) at a second rotational speed and a hydromechanical transmission (54), including two controllable, variable displacement pumps (90, 96), which are coupled to the differential (72) and configured to adjust the second rotational speed.

## Description

### BACKGROUND OF THE INVENTION

The subject matter disclosed herein relates to a gearing assembly that rotatably couples a prime mover and a generator.

Prime movers, such as turbomachines, are employed in varied technological applications. A typical turbomachine includes a fan section, a compression section, a combustor section and a turbine section. Turbomachines have at least one rotor in the compression section that must be accelerated to a relatively high rotational speed until the rotor is rotating fast enough to sustain operation of the turbomachine. A generator, separate from the turbomachine, is often used as a motor to rotate the rotor during start-up of the turbomachine. After the turbomachine is self-sustaining, the generator is subsequently used as a generator that is driven by the turbomachine.

During use, the rotational speeds of prime movers may be different than the optimal speed of the generator. Also, the rotational speeds vary considerably during operation and it is desirable to provide the generator with a rotational input that is relatively consistent. For example, during where the prime mover is embodied as an aircraft engine, a throttling down or failure of the engine may lead to the rotational speed being substantially lower than the optimal speed of the generator. In this or other cases, hydro-mechanical transmissions may be used to step-up or step-down rotation between the prime mover and the generator.

### BRIEF DESCRIPTION OF THE INVENTION

According to one aspect of the invention, a gearing assembly is provided and includes a mechanical transmission, a differential, and a hydro-mechanical transmission. The mechanical transmission and the differential are configured to rotatably couple a prime mover to a generator such that a first rotational speed input to the mechanical transmission is output to the generator by the differential at a second rotational speed. The hydro-mechanical transmission includes two controllable, variable displacement pumps and is coupled to the differential and is configured to adjust the second rotational speed.

According to another aspect of the invention, a gearing assembly is provided and includes a mechanical transmission, a differential, a hydro-mechanical transmission and a controller. The mechanical transmission and the differential are configured to rotatably couple a prime mover and a generator such that a first rotational speed input to the mechanical transmission is output to the generator by the differential at a second rotational speed. The hydro-mechanical transmission includes two controllable, variable displacement pumps and is coupled to the differential and is configured to adjust the second rotational speed. The controller is coupled to the mechanical transmission and the hydro-mechanical transmission and configured to control an operation of each in accordance with a magnitude of the first rotational speed input.

According to yet another aspect of the invention, a method of operating a gearing assembly is provided and includes setting a mechanical transmission to operate in a first or second gear in accordance with a rotational speed of a prime mover, configuring a differential to transmit rotation from the mechanical transmission to a generator at a different rotational speed from that of the prime mover and adjusting a hydro-mechanical transmission to step-up or step-down the rotation transmitted from the differential to the generator in accordance with the rotational speed of the prime mover.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 shows schematic view of an example turbomachine, generator, and gearing arrangement; and
FIG. 2 shows a more detailed view of the FIG. 1 gearing arrangement in accordance with embodiments.

The detailed description explains embodiments of the invention, together with advantages and features, by way of example with reference to the drawings.

### DETAILED DESCRIPTION OF THE INVENTION

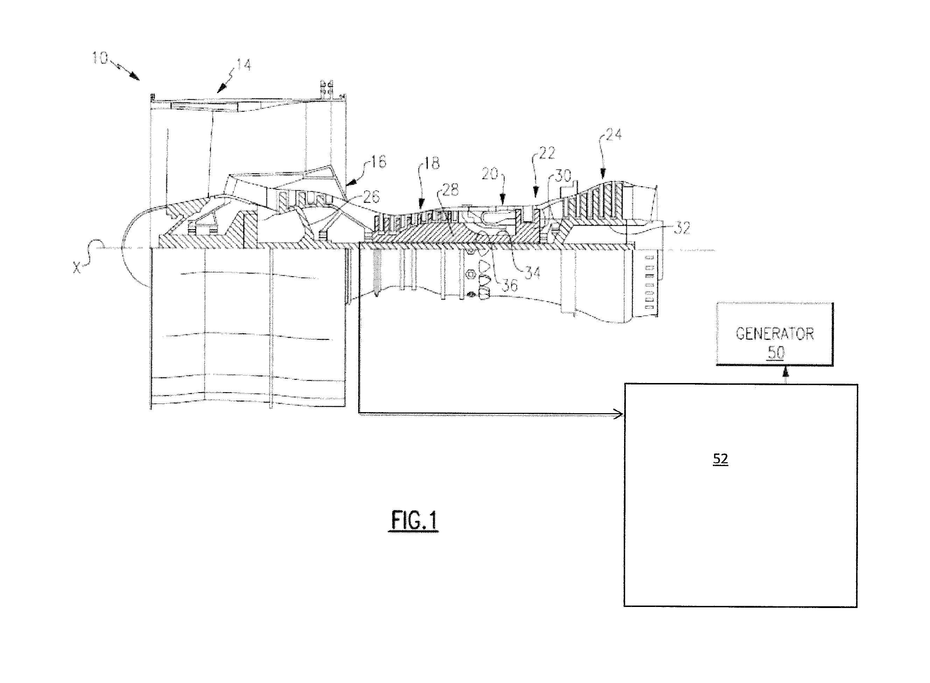

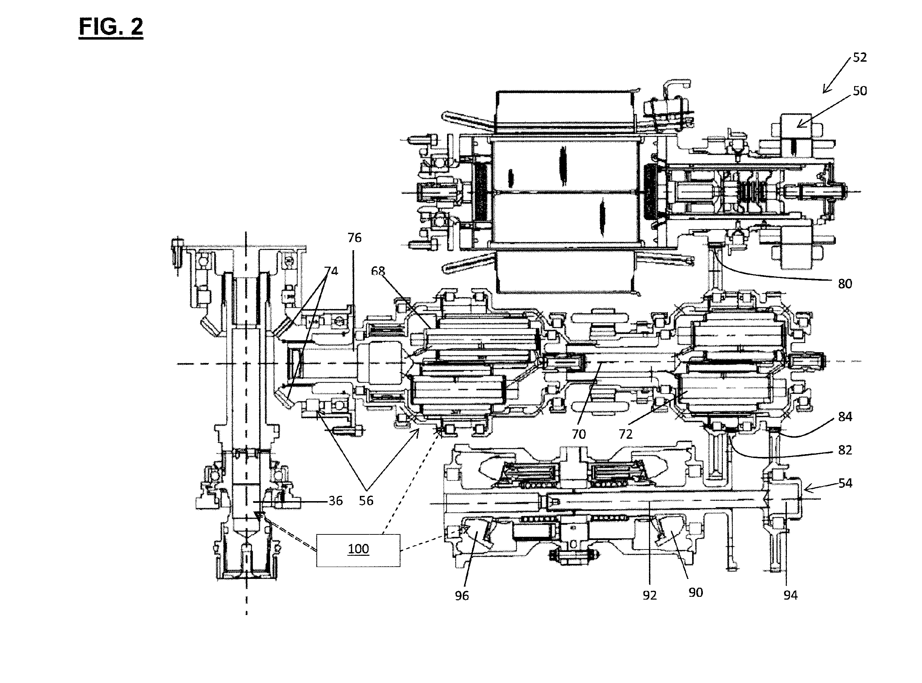

With reference to FIGS. 1 and 2, a turbomachine, such as an exemplary gas turbine engine 10, is used as a prime mover to propel an aircraft. The gas turbine engine 10 includes a fan section 14, a low-pressure compressor section 16, a high-pressure compressor section 18, a combustion section 20, a high-pressure turbine section 22 and a low-pressure turbine section 24 all of which rotate about axis X. Other exemplary turbomachines may include more or fewer sections. During operation, air is compressed in the low-pressure compressor section 16 and the high-pressure compressor section 18. The compressed air is then mixed with fuel and combusted in the combustion section 20. The products of this combustion are expanded across the high-pressure turbine section 22 and the low-pressure turbine section 24.

The low-pressure compressor section 16 includes a rotor 26 and the high-pressure compressor section 18 includes a rotor 28. The rotors 26 and 28 include alternating rows of rotating airfoils or rotating blades and static airfoils or static blades. The high-pressure turbine section 22 includes a rotor 30 and the low-pressure turbine section 24 includes a rotor 32. The rotors 30 and 32 are configured to rotate about the axis X in response to expansion of the products of the combustion across the high-pressure turbine section 22 and the low-pressure turbine section 24, respectively. The rotors 30 and 32 include alternating rows of rotatable airfoils or rotatable blades and static airfoils or static blades.

The rotor 30 is coupled to the rotor 28 through a high-pressure spool 34 and the rotor 32 is coupled to the rotor 26 through a low-pressure spool 36. Thus, rotation of the rotors 30 and 32 rotates the rotors 28 and 26, which drives compression in the high-pressure compressor section 18 and the low-pressure compressor section 16, respectively. During operation of the gas turbine engine 10, the low-pressure spool 36 rotates across a greater range of rotational speeds than the high-pressure spool 34. Although the examples of a prime mover in this disclosure are described with reference to the gas turbine engine 10 having the two-spool architecture, as described above, the examples are not limited to such architectures. Other types of turbomachines and gas turbine engines may have other architectures, such as a single-spool axial design and a three-spool axial design.

The low-pressure spool 36 may also be configured to drive a generator 50. The low-pressure spool 36 may drive the generator 50 instead of, or in addition to, the high-pressure spool 34. When operating, the generator 50 provides electrical power to various loads on the aircraft. Since those electrical loads operate at a relatively constant frequency or at a variable frequency within a range of about 360-800 Hz, the generator 50 is typically required to provide power at a relatively constant frequency or at a variable frequency within a range of about 360-800 Hz as well.

As noted above, the rotational speed of the low-pressure spool 36 may vary considerably during operation of the gas turbine engine 10 especially in a case of a throttling down or failure of the gas turbine engine 10. Indeed, the range of potential rotational speeds for the low-pressure spool 36 is greater than the range of potential speeds for the high-pressure spool 34 and, where the low-pressure spool 36 is used to rotatably drive the generator 50, a gearing arrangement 52 accommodates the variation in rotational speeds from the low-pressure spool 36.

As shown in FIG. 2, an exemplary gearing arrangement 52 is provided and includes a hydro-mechanical transmission 54, a mechanical transmission 56 and a differential 72. The mechanical transmission 56 is operably coupled to the low-pressure spool 36 to be receptive of an input rotational speed of the gas turbine engine 10. The differential 72 is operably interposed between the mechanical transmission 56 and the generator 50.

The mechanical transmission 56 receives a rotational input via bevel gear 74 that is reflective of the rotational speed of the low-pressure spool 36. The bevel gear 74 is directly coupled to carrier shaft 76. The carrier shaft 76 transmits the rotation to the first differential gear arrangement 68, which may be configured as a two-speed planetary gear arrangement. An output of the first differential gear arrangement 68 is coupled to the differential carrier shaft 70, which then transmits rotation to the second differential gear arrangement 72. The second differential gear arrangement 72 is rotatably coupled to the generator 50 at generator gear mesh 80.

With this construction, the mechanical transmission 56 may be configured to be selectively adjusted between at least a first position and a second position. In the first position, which is indicative of a 1st gear, the mechanical transmission 56 operates such that the input rotational speed of the carrier shaft 76 is transmitted through the first differential gear arrangement 68 and output to the differential carrier shaft 70 at twice the rotational speed of the low-pressure spool 36. By contrast, in the second position, which is indicative of a 2nd gear, the mechanical transmission 56 operates such that the input rotational speed of the carrier shaft 76 is transmitted through the first differential gear arrangement 68 and output to the differential carrier shaft 70 at the same rotational speed of the low-pressure spool 36. The mechanical transmission 56 is thus a two-speed transmission although it is to be understood that the mechanical transmission 56 may be configured as a three-speed transmission or a transmission with more than 3 speeds.

The generator 50 may have a rated speed at which the generator 50 is to be rotatably driven such that power can be delivered to the various loads coupled to the generator 50 at the appropriate operating frequencies. As mentioned above, these operating frequencies may be a relatively constant frequency or a variable frequency within a range of about 360-800 Hz and, as such, it may be necessary for the second differential gear arrangement 72 to rotatably drive the generator 50 via the generator gear mesh 80 at about 24,000 rpm, for example. In such cases, if the low-pressure spool 36 is operating at only 2,000 rpm, the mechanical transmission 56 should be operated in the first position (i.e., the 1st gear) and, if the low-pressure spool 36 is operating at 4,000 rpm, the mechanical transmission 56 should be operated in the second position (i.e., the 2nd gear).

If, however, the mechanical transmission 56 is operating in the first position and the low-pressure spool 36 is operating below 2,000 rpm due to a throttling down or failure of the gas turbine engine 10, it may be necessary to step-up the rotational speed delivered to the generator 50 by the second differential gear arrangement 72 so that the generator 50 can continue to operate. To this end, the second differential gear arrangement 72 is rotatably coupled to the hydro-mechanical transmission 54 at variable pump gear mesh 82 and trim gear mesh 84.

The hydro-mechanical transmission 54 includes two controllable, variable displacement pumps 90 and 96. Within the normal engine operating speed range (i.e., 2000-10000 rpm), variable displacement pump 96 has its swash plate positioned on its generate mode stop in order to provide max displacement. Variable displacement pump 90 has its displacement altered as necessary to maintain generator output frequency at a constant or relatively constant frequency.

When mechanical transmission 56 is operating in the first position and the low-pressure spool 36 is operating below 2,000 rpm due to a throttling down or failure of the gas turbine engine 10, the swash plate angle of the variable displacement pump 90 is positioned on its max pumping stop and the swash plate of variable displacement pump 96 is controlled, reducing its displacement in order to maintain generator output frequency at a constant or relatively constant frequency. Generator power output capability during sub-normal operating input operating speeds reduces a proportional pump 96 swash plate angle.

Since the hydro-mechanical transmission 54, as described above, allows the low-pressure spool 36 to be used as an emergency power source during throttling down or failure of the gas turbine engine 10, it may be possible to reduce aircraft weight and to thereby increase fuel economy, payload and/or passenger carrying capability. Moreover, the use of the hydro-mechanical transmission 54 will allow for elimination of an emergency power generator, such as a RAM air turbine, and a hydraulic pump with these features generally being relatively heavy and prone to occupying relatively large volumes considering that they are often used only for throttling down or failure scenarios.

In accordance with further aspects of the invention, a controller 100 may be provided and disposed in signal communication with the mechanical transmission 56 and the hydro-mechanical transmission 54. More particularly, the controller 100 may be operably coupled to the mechanical transmission 56 and to the hydro-mechanical transmission 54 and thereby configured to control the mechanical transmission 56 to operate in the first or second position and to control the respective angles of each of the variable position swash plates of pumps 96 and 90. With this construction, for example, the controller 100 would be able to sense a magnitude of the rotational speed of the low-pressure spool 36 and set the mechanical transmission 56 to operate in the appropriate position (i.e., 1st or 2nd gear) and make a further determination as to whether the hydro-mechanical transmission 54 is needed to step-up or step-down the speed at which the generator 50 is driven. That is, if it is found that the low-pressure spool 36 is rotating well below a minimum speed for the first gear, the angle of the variable position swash plate 96 of the hydro-mechanical transmission 54 can be changed accordingly to step-up the rotational speed.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A gearing assembly (52), comprising:
a mechanical transmission (56);
a differential (72), the mechanical transmission (56) and the differential (72) being configured to rotatably couple a prime mover (10) and a generator (50) such that a first rotational speed input to the mechanical transmission (56) is output to the generator (50) by the differential (72) at a second rotational speed; and
a hydro-mechanical transmission (54), including two controllable, variable displacement pumps (90, 96), which is coupled to the differential (72) and configured to adjust the second rotational speed.

2. The gearing assembly (52) of claim 1, further comprising a controller (100) coupled to the mechanical transmission (56) and the hydro-mechanical transmission (54) and configured to control an operation of each in accordance with a magnitude of the first rotational speed input.

3. The gearing assembly (52) according to claim 1 or 2, wherein the prime mover comprises a turbomachine (10).

4. The gearing assembly (52) according to claim 1 or 2, wherein the prime mover comprises a gas turbine engine (10) of an aircraft.

5. The gearing assembly (52) according to any preceding claim, wherein a low-pressure spool (36) of the prime mover (10) provides the first rotational speed to the mechanical transmission (56).

6. The gearing assembly (52) according to any preceding claim, wherein the mechanical transmission (56) comprises a two-speed transmission.

7. The gearing assembly (52) according to any preceding claim, wherein the mechanical transmission (56) comprises a bevel gear (74), which is receptive of the input first rotational speed.

8. The gearing assembly (52) according to any preceding claim, wherein the differential (72) comprises first and second differential gear arrangements (68, 72).

9. The gearing assembly (52) according to claim 8, wherein at least one of the first and second differential gear arrangements (68, 72) comprises a two-speed planetary gear arrangement.

10. A method of operating a gearing assembly (52), comprising:
setting a mechanical transmission (56) to operate in a first or second gear in accordance with a rotational speed of a prime mover (10);
configuring a differential (72) to transmit rotation from the mechanical transmission (56) to a generator (50) at a different rotational speed from that of the prime mover; and
adjusting a hydro-mechanical transmission (54) to step-up or step-down the rotation transmitted from the differential (72) to the generator (50) in accordance with the rotational speed of the prime mover (10).

11. The method of operating the gearing assembly (52) according to claim 10, further comprising sensing the rotational speed of the prime mover (10).

12. The method of operating the gearing assembly (52) according to claim 10 or 11, wherein the setting comprises setting the mechanical transmission (56) to operate in the first or second gear in accordance with a rotational speed (36) of a low-pressure spool of the prime mover (10).

13. The method of operating the gearing assembly (52) according to any of claims 10 to 12, wherein the adjusting comprises adjusting an angle of a variable position swash plate of the hydro-mechanical transmission (54).
